# EUROPEAN PATENT SPECIFICATION

(11) **EP 3 594 469 B1**
(45) Date of publication and mention of the grant of the patent: **15.01.2025**
(21) Application number: 17899392.9
(22) Date of filing: 06.03.2017
(51) Int. Cl.: F02B 25/04, F02D 13/02, F02F 1/22, F02B 75/02

(54) **UNIFLOW SCAVENGING TYPE TWO-CYCLE ENGINE**
ZWEITAKTMOTOR MIT UNIDIREKTIONALER SPÜLUNG
MOTEUR DEUX TEMPS À BALAYAGE LONGITUDINAL

(43) Date of publication of application: 15.01.2020
(73) Proprietor: Mitsui E&S DU Co., Ltd., Aioi-shi, Hyogo 678-0041 (JP)
(72) Inventor: YAMADA, Takayuki, Tokyo 135-8710 (JP); YAMADA, Takeshi, Tokyo 135-8710 (JP); MASUDA, Yutaka, Tokyo 135-8710 (JP); UMEMOTO, Yoshiyuki, Aioi-shi Hyogo 678-0041 (JP)
(74) Representative: TBK
(86) International application number: PCT/JP2017/008746
(87) International publication number: WO 2018/163237

(56) References cited:
- EP-A1- 0 851 101
- EP-A2- 1 471 228
- DE-A1- 19 700 412
- JP-A- 2004 340 120
- JP-A- 2012 219 727
- JP-A- 2015 124 703
- JP-A- 2016 089 642
- JP-A- H07 324 626
- JP-A- H10 196 326
- JP-A- S62 243 918
- US-A- 3 815 566
- US-B1- 9 194 344

## Description

### Technical Field

The present disclosure relates to a uniflow scavenging type two-cycle engine.

### Background

In a uniflow scavenging type two-cycle engine which is also used as an engine of a ship, a scavenging port is provided on one end side of a cylinder in the stroke direction of a piston, and an exhaust port is provided on a cylinder cover disposed on the other end side thereof. When fuel is burned in a combustion chamber and the piston pushed by combustion gas generated by the combustion moves to a position closer to the bottom dead center than the scavenging port, active gas is sucked into the inside of the cylinder from the opened scavenging port, and the exhaust gas after the fuel combustion is pushed out of the exhaust port by the active gas and is discharged.

Further, JP 2015- 151963 A describes a so-called dual-fuel type uniflow scavenging type two-cycle engine, which switches the fuel between liquid fuel and fuel gas.

DE 197 00 412 A1 discloses a two-stroke engine. The two stroke engine has each piston engaging a slider sleeve with its lower edge of the piston skirt, in the downward stroke. The slider is depressed to open inlet slots for the inlet fuel-air mixture. The slider is connected to three push rods in the cylinder wall with each push rod connected to an exhaust valve in the cylinder head. The exhaust valves are spring loaded into the closed position. The inlet and exhaust are pushed open near the BDC of the piston movement. The valve springs include secondary springs which are engaged when the valves are pushed into the open setting, and thereby reinforce the normal valve springs. The top edge of the slider sleeve has a conical seal and a serrated lip which engages a similar profile on the bottom edge of the piston skirt, to prevent the piston from rotating.

EP 147 12 28 A2 discloses an internal combustion engine with a scavenging control valve apparatus. A valve operating device drives a scavenging control valve according to an engine's crank angle. The valve operating device controls the scavenging control valve to synchronize the closing timing of a scavenging passage after a bottom dead position with the closing timing of an exhaust valve.

US 3 815 566 A discloses a low-pollution engine of the type that burns air and fuel to move a piston, wherein a separate combustion chamber is provided near one end of the cylinder and connected to the cylinder by a constricted passageway, the combustion chamber holding enough air to completely burn all of the fuel therein so that substantially only combustion products enter the cylinder. The walls of the combustion chamber are insulated so that they remain heated, and a perforated plate connects the combustion chamber to the cylinder so that the hot combustion products pass through the plate into the cylinder to heat extra air therein and move the piston. The combustion chamber and cylinder are both purged but by different amounts of air, and fuel is admitted to the combustion chamber by an injection nozzle whose fuel stream hits a target in the combustion chamber to further break up and disperse the fuel.

EP 085 11 01 A1 discloses a diesel engine. The engine comprises a piston which works in a cylinder-liner. At the bottom end of the liner is a slide working with it to form a valve. This moves with the piston away from the liner so as to form with the latter an annular inlet port for scavenging air to the cylinder. The port shuts again with upward movement of the piston towards the top dead-centre position. The slide can be driven to and fro by the piston, while a first spring and-or damper unit is mounted between piston and slide. Further spring and-or damper units aid, restrict and-or damp movement of the slide.

US 9 194 344 B1 discloses an engine system that has an engine block that defines a cylinder bore, and a cylinder liner disposed within the cylinder bore. The engine system further has an air intake port radially formed within the cylinder liner, a piston within the cylinder liner to open and close the air intake port, a cylinder head to close off an end of the cylinder liner and form a combustion chamber, and an exhaust valve within the cylinder head.

### Summary

### Technical Problem

In liquid fuel and fuel gas, in some cases, the optimum timing for causing the active gas to flow into the cylinder from the scavenging port may differ. Therefore, if the position of the scavenging port is designed in accordance with one of liquid fuel and fuel gas, in some cases, it is difficult to cause the active gas to flow into the cylinder at an appropriate timing when the other fuel is used.

Moreover, regardless of the presence or absence of fuel switching, the opening and closing timing of the scavenging port affects the efficiency of the engine. For example, if the scavenging port is close to the top dead center of the piston and the opening timing becomes earlier, there is a possibility that the expansion stroke will be shortened, thereby causing a decline in efficiency, and if the scavenging port is close to the bottom dead center of the piston and the closing timing becomes earlier, there is a possibility that the scavenging period of time will be shortened and a sufficient amount of active gas cannot be sucked.

Therefore, there is a demand for development of a technique for opening and closing the scavenging port at an appropriate timing depending on the operating conditions.

An object of the present disclosure is to provide a uniflow scavenging type two-cycle engine capable of opening and closing the scavenging port at an appropriate timing depending on the operating conditions.

### Solution to Problem

This object is achieved by a uniflow scavenging type two-cycle engine having the features of claim 1. Advantageous further developments are defined in the dependent claims.

### Effects

According to the present disclosure, it is possible to open and close the scavenging port at an appropriate timing depending on the operating conditions.

### Brief Description of Drawings

FIG. 1 is an explanatory view showing an entire configuration of a uniflow scavenging type two-cycle engine.
FIG. 2 is an explanatory view showing the structure of a mover.
FIG. 3A is a cross-sectional view taken along a line 3A-3A of FIG. 2.
FIG. 3B is a cross-sectional view taken along a line 3B-3B of FIG. 2.
FIG. 4 is an explanatory view showing an operation of the mover.
FIG. 5 is an explanatory view showing an entire configuration of a uniflow scavenging type two-cycle engine of a modified example.

### Description of Embodiments

Hereinafter, preferred embodiments of the present disclosure will be described in detail with reference to the attached drawings. Dimensions, materials, specific numerical values and the like of constituent elements shown in the present embodiment are merely examples for facilitating understanding of the invention, and do not limit the present disclosure unless otherwise specified. Further, in the specification and the drawings, by denoting elements having substantially the same functions and configurations by the same reference signs, repeated descriptions will be omitted, and elements not directly related to the present disclosure will not be shown.

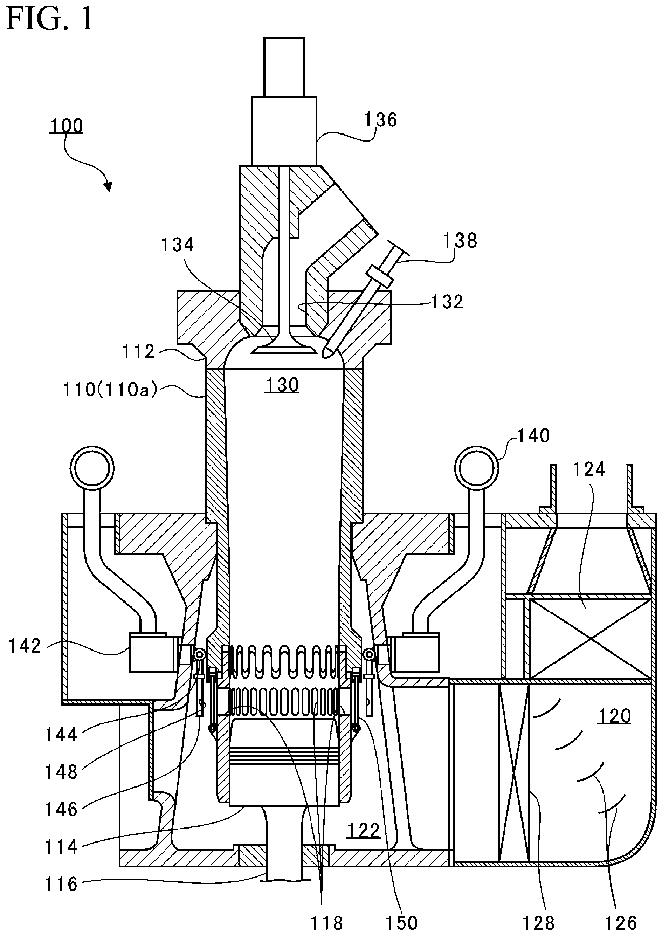

FIG. 1 is an explanatory view showing an entire configuration of a uniflow scavenging type two-cycle engine 100. The uniflow scavenging type two-cycle engine 100 is, for example, used in a ship or the like, and can selectively execute either one operation mode of a gas operation mode for mainly burning fuel gas that is gaseous fuel and a diesel operation mode for burning fuel oil that is liquid fuel. That is, the uniflow scavenging type two-cycle engine 100 is a dual-fuel type engine that switches the fuel between liquid fuel and fuel gas.

Specifically, the uniflow scavenging type two-cycle engine 100 is configured to include a cylinder 110, a cylinder cover 112, a piston 114, a piston rod 116, a scavenging port 118, a scavenging reservoir 120, a scavenging chamber 122, a cooler 124, a flow-adjusting plate 126, a drain separator 128, a combustion chamber 130, an exhaust port 132, an exhaust valve 134, an exhaust valve drive device 136, a liquid fuel injection valve 138, a fuel gas main pipe 140, a fuel injection device 142, an annular pipe 144, a fuel pipe 146, a fuel injection port 148, and a mover 150. Hereinafter, in a central axis direction of the cylinder 110 (an up-down direction in the drawing of FIG. 1), the cylinder cover 112-side may be referred to as an upper side, and the scavenging chamber 122-side may be referred to as a lower side.

In the uniflow scavenging type two-cycle engine 100, the piston 114 slides inside the cylinder 110 (a cylinder liner 110a), and exhausting, intake, compression, combustion, and expansion are performed during two strokes of an up-stroke and a down-stroke of the piston 114. One end of the piston rod 116 is fixed to the piston 114. Further, a cross head (not shown) is connected to the other end of the piston rod 116, and reciprocates with the piston 114. When the cross head reciprocates with the reciprocation of the piston 114, a crankshaft (not shown) rotates in conjunction with the reciprocation. Hereinafter, a direction in which the piston 114 reciprocates in the central axis direction of the cylinder 110 may be referred to as a stroke direction of the piston 114.

The scavenging ports 118 are holes penetrating from an inner peripheral surface to an outer peripheral surface of the cylinder 110, and the plurality of scavenging ports 118 are provided at intervals on the entire circumference of the cylinder 110. Further, the scavenging ports 118 open in a process of movement of the piston 114 toward the bottom dead center, and cause active gas to flow into the cylinder 110. The active gas contains oxygen, an oxidant such as ozone, or a mixture air thereof (for example, air). Although the scavenging port 118 of the present embodiment is formed in an oval shape extending in the stroke direction when viewed in the radial direction of the cylinder 110, not being limited to such a shape, the scavenging port 118 may have, for example, a circular shape, an elliptical shape, a rectangular shape, a polygonal shape or the like. Hereinafter, the bottom dead center of the piston 114 may be referred to simply as a bottom dead center, and the top dead center of the piston 114 may be referred to simply as a top dead center.

Active gas (for example, air) compressed by a supercharger, a blower or the like (not shown) is cooled by the cooler 124 and is sealed in the scavenging reservoir 120. The active gas flows in the scavenging reservoir 120 from the cooler 124 to the scavenging chamber 122. The compressed and cooled active gas is flow direction-adjusted by the flow-adjusting plates 126 disposed in the scavenging reservoir 120, and then water is removed therefrom by the drain separator 128.

The scavenging chamber 122 communicates with the scavenging reservoir 120 and surrounds one end side (a lower side in FIG. 1) of the cylinder 110 in the stroke direction of the piston 114 (hereinafter simply referred to as the stroke direction). The active gas subjected to compression, cooling, and removal of water is guided to the scavenging chamber 122 from the scavenging reservoir 120.

The scavenging ports 118 open in the scavenging chamber 122. When the piston 114 descends below the scavenging ports 118, the inside of the cylinder 110 and the scavenging chamber 122 communicate with each other through the scavenging ports 118, and the scavenging ports 118 suck the active gas into the cylinder 110 from the scavenging chamber 122 due to a pressure difference between the scavenging chamber 122 and the inside of the cylinder 110.

When the piston 114 is close to the top dead center, the combustion chamber 130 is surrounded by the cylinder cover 112 (a cylinder head) disposed to cover an upper end opening portion of the cylinder 110, the cylinder liner 110a, and the piston 114 and thus is formed inside the cylinder 110. The active gas and the fuel gas sucked into the cylinder 110 are guided to the combustion chamber 130 by the piston 114.

The exhaust port 132 is formed on the upper side of the combustion chamber 130 in FIG. 1 and is opened and closed to discharge the exhaust gas generated by burning the fuel gas in the cylinder 110 outward of the cylinder 110. The exhaust valve 134 is slid up and down by the exhaust valve drive device 136 at predetermined timings to open and close the exhaust port 132. After combustion of the fuel gas, when the exhaust valve 134 is opened, the exhaust gas in the cylinder 110 is pushed out of the exhaust port 132 by the active gas (scavenging air) flowing in from the scavenging ports 118.

Further, as described above, a diesel operation mode and a gas operation mode are provided in the uniflow scavenging type two-cycle engine 100 of the present embodiment. A liquid fuel supply mechanism to be mainly used in the diesel operation mode and a fuel gas supply mechanism to be mainly used in the gas operation mode will be described below.

### (Liquid Fuel Supply Mechanism)

The liquid fuel injection valve 138 is provided on the cylinder cover 112, and a tip thereof protrudes into the combustion chamber 130, and the liquid fuel injection valve 138 injects the fuel oil from the tip into the combustion chamber 130 in the diesel operation mode.

### (Fuel Gas Supply Mechanism)

The fuel gas main pipe 140 communicates with a fuel tank (not shown) and communicates with the annular pipe 144 via the fuel injection device 142. The fuel gas is guided from the fuel tank to the fuel gas main pipe 140, and when the fuel injection device 142 is operated, the fuel gas in the fuel gas main pipe 140 flows into the annular pipe 144.

Here, the fuel gas is, for example, a gas generated by gasifying LNG (Liquefied Natural Gas). Further, the fuel gas is not limited to LNG, and it is possible to use a gas obtained by gasifying, for example, LPG (Liquefied Petroleum Gas), light oil, heavy oil or the like.

The annular pipe 144 is disposed radially outward of the cylinder 110 and above the scavenging ports 118 in FIG. 1 and extends annularly in the circumferential direction of the cylinder 110 to surround the cylinder 110. A plurality of fuel pipes 146 are fixed to the scavenging port 118-side of the annular pipe 144 in the stroke direction (that is, the lower side in FIG. 1). One fuel pipe 146 is disposed for each scavenging port 118 and extends in the stroke direction. Hereinafter, the radial direction of the cylinder 110 may be referred to simply as a radial direction, and the circumferential direction of the cylinder 110 may be referred to simply as a circumferential direction.

The fuel pipe 146 faces a wall surface of the cylinder 110 between scavenging ports 118 adjacent to each other in the circumferential direction, and the fuel injection port 148 is formed on a portion of the fuel pipe 146 facing the wall surface. Here, since a plurality of scavenging ports 118 are provided on the entire circumference of the cylinder 110, a plurality of fuel pipes 146 (the fuel injection ports 148) are also provided in the circumferential direction of the cylinder 110 in accordance with the scavenging ports 118.

The fuel injection ports 148 inject the fuel gas flowed into the annular pipe 144 into the active gas to be sucked into the scavenging ports 118. As a result, the fuel gas joins the flow of the active gas and is sucked into the cylinder 110 from the scavenging ports 118 together with the active gas.

At a desired time point in the engine cycle, a suitable amount of the fuel oil (an amount smaller than in the diesel operation mode) is injected from the liquid fuel injection valve 138. The fuel oil is vaporized by heat of the combustion chamber 130. Further, the fuel oil is vaporized and spontaneously ignited and burns in a short time, the temperature of the combustion chamber 130 becomes extremely high, and the fuel gas guided to the combustion chamber 130 and compressed is burned. The piston 114 is reciprocated mainly by the expansion pressure due to the combustion of the fuel gas.

In the fuel gas and the fuel oil, that is, in the gas operation mode and the diesel operation mode, in some cases, the optimum timings for causing the active gas to flow into the cylinder 110 from the scavenging port 118 may be different. Therefore, if the position of the scavenging port 118 is designed in accordance with either one of the fuel gas and the fuel oil, in some cases, it may be difficult to cause the active gas to flow into the cylinder 110 at an appropriate timing when the other fuel is used.

Therefore, the uniflow scavenging type two-cycle engine 100 is provided with the mover 150 that changes the position of the scavenging port 118 in the stroke direction.

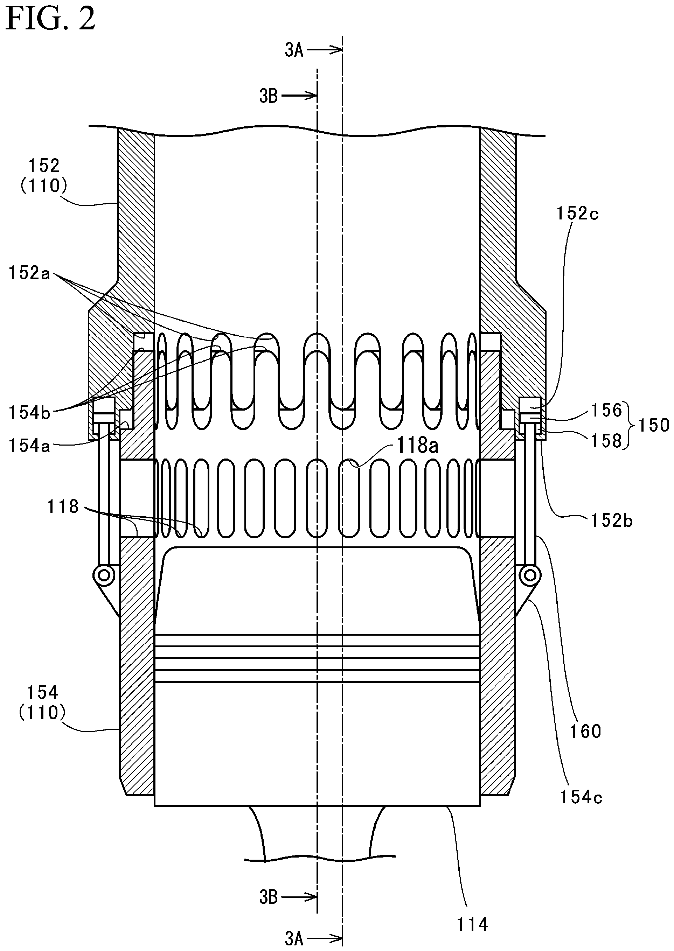

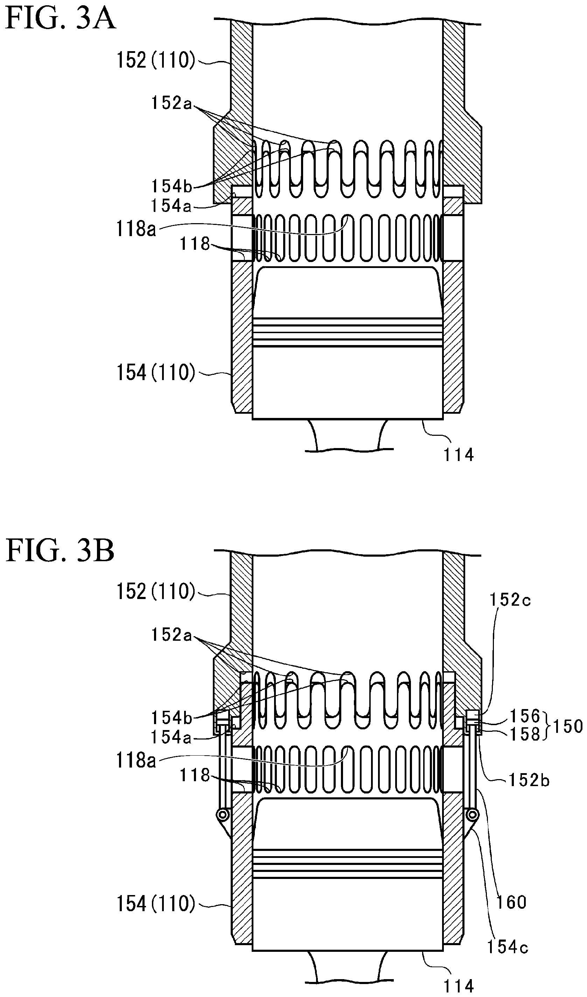

FIGS. 2, 3A, and 3B are explanatory views showing the structure of the mover 150. FIG. 2 extracts and shows the vicinity of the scavenging ports 118 in FIG. 1, FIG. 3A shows a cross section taken along a line 3A-3A of FIG. 2, and FIG. 3B shows a cross section taken along a line 3B-3B of FIG. 2. Here, FIGS. 3A and 3B show cross-sectional views each including the central axis of the cylinder 110.

As shown in FIG. 2, the cylinder 110 (the cylinder liner 110a) is configured to include an upper cylinder 152 on an upper side (the cylinder cover 112-side of FIG. 1) in FIG. 2, and a lower cylinder 154 disposed below (the piston 114's bottom dead center-side of) the upper cylinder 152 in FIG. 2. The upper cylinder 152 is positioned to be closer to the piston 114's top dead center than the lower cylinder 154, and the scavenging ports 118 are formed in the lower cylinder 154.

On an inner peripheral surface of the lower end portion on the lower side (the lower cylinder 154-side) of the upper cylinder 152 in FIG. 2, an upper groove 152a recessed radially outward from the inner peripheral surface is provided. As shown in FIGS. 3A and 3B, a plurality of upper grooves 152a are provided at intervals in the circumferential direction, and extend in the stroke direction. The upper grooves 152a open downward of the upper cylinder 152.

Further, on the upper end surface 154a on the upper side (the upper cylinder 152-side) of the lower cylinder 154 in FIG. 2, a lower protrusion 154b protruding toward the upper cylinder 152 is provided. The lower protrusion 154b is provided in a portion on the radially inner side of the upper end surface 154a. As shown in FIGS. 3A and 3B, a plurality of lower protrusions 154b are provided to be spaced apart from each other in the circumferential direction at the same intervals as the upper grooves 152a, and the length (height) in the stroke direction of the lower protrusion 154b is substantially equal to the length in the stroke direction of the upper groove 152a.

Further, the upper end surface 154a (end portion) of the lower cylinder 154 is inserted through (into) the upper cylinder 152 in the stroke direction, and the plurality of lower protrusions 154b of the lower cylinder 154 are inserted into the plurality of upper grooves 152a of the upper cylinder 152 in the stroke direction. That is, the upper end portion of the lower cylinder 154 other than the lower protrusions 154b is closely inserted into the lower end portion of the upper cylinder 152 below the upper grooves 152a to be slidable in the stroke direction. By fitting the lower protrusion 154b into the upper groove 152a, circumferential rotation of the lower cylinder 154 with respect to the upper cylinder 152 is restricted. In addition, the lower protrusion 154b can slide in the upper groove 152a in the stroke direction, and the lower cylinder 154 can relatively move with respect to the upper cylinder 152 in the stroke direction.

Further, the inner diameter of the upper cylinder 152 (the inner diameter of the portion of the upper cylinder 152 above the upper grooves 152a) and the inner diameter of the lower cylinder 154 are substantially equal to each other, and portions in which the lower protrusions 154b are inserted into the upper grooves 152a are designed such that there are almost no steps in the circumferential direction.

The mover 150 is provided in a connection portion between the upper cylinder 152 and the lower cylinder 154, and moves the lower cylinder 154 in the stroke direction with respect to the upper cylinder 152. Specifically, the mover 150 is configured of a hydraulic mechanism, and includes a hydraulic piston 156 and a hydraulic chamber 158. However, the mover 150 is not limited to a hydraulic mechanism, and may have any configuration as long as the lower cylinder 154 can be moved in the stroke direction with respect to the upper cylinder 152.

A hollow portion 152c is provided in a portion of the lower end portion of the upper cylinder 152, which is radially outward of the upper grooves 152a. A plurality (for example, four in this case) of hollow portions 152c are disposed to be spaced apart from each other in the circumferential direction of the upper cylinder 152, and symmetrically with respect to the central axis of the upper cylinder 152. That is, the hollow portions 152c are disposed at equal intervals in the circumferential direction of the upper cylinder 152. The hydraulic piston 156 is disposed inside the hollow portion 152c to be slidable in the stroke direction, and divides the hollow portion 152c into two spaces in the stroke direction.

The hydraulic chamber 158 is a space on the lower side (the lower cylinder 154-side) of the hollow portion 152c in FIG. 2, which is partitioned by the hydraulic piston 156. The hydraulic chamber 158 communicates with an oil pump (not shown), and pressure-increased hydraulic oil is supplied from the oil pump to the hydraulic chamber 158.

When the hydraulic oil is supplied to the hydraulic chamber 158, the hydraulic piston 156 is moved upward in FIG. 2 by the hydraulic pressure of the hydraulic oil supplied to the hydraulic chamber 158. Further, when the hydraulic oil is discharged from the hydraulic chamber 158, the hydraulic piston 156 moves downward in FIG. 2 by gravity. Further, for example, a configuration in which the pressure-increased hydraulic oil is alternately supplied to the two spaces divided by the hydraulic piston 156 in the hollow portion 152c and the hydraulic piston 156 reciprocates in the stroke direction may be provided. The movement of the hydraulic piston 156 to either one side in the stroke direction may be performed by the hydraulic oil, and the movement to the other side may be performed by another external force (gravity or a pushing force of a spring or the like).

A shaft 160 is fixed to the lower side of the hydraulic piston 156 in FIG. 2. The shaft 160 penetrates a wall portion of the upper cylinder 152 below the hydraulic chamber 158 in FIG. 2 and extends to a position below the scavenging port 118 in the stroke direction. The lower end portion of the shaft 160 is fixed to a protrusion 154c provided on the outer peripheral surface of the lower cylinder 154.

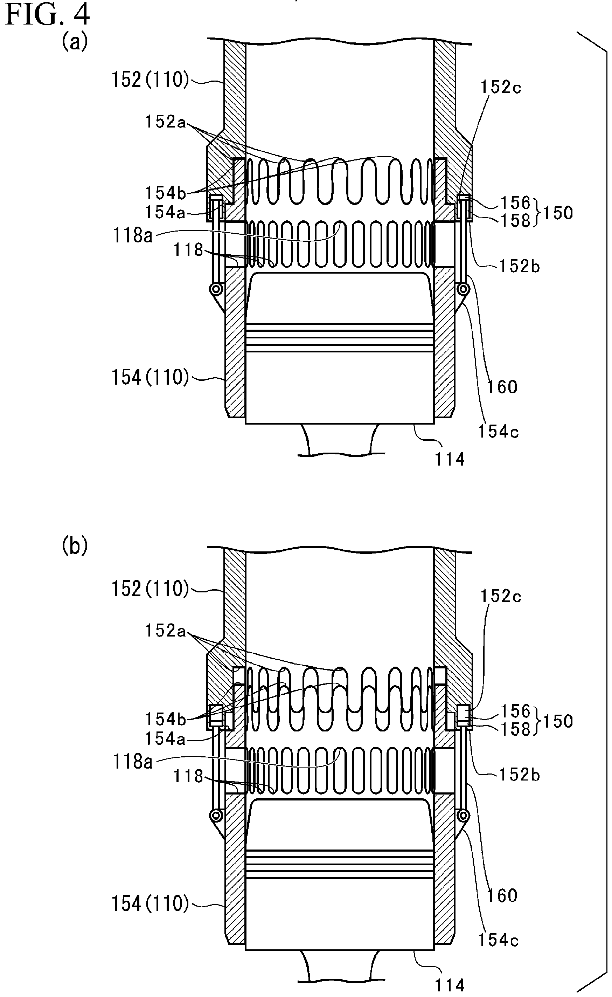

FIG. 4 is an explanatory view showing the operation of the mover 150. The part (a) of FIG. 4 shown on the upper side of the drawing of FIG. 4 shows a state in which the lower cylinder 154 is at the uppermost position (a position at which the lower cylinder 154 is closest to the top dead center of the piston 114, and a position at which the lower cylinder 154 is closest to the upper cylinder 152). The part (b) of FIG. 4 shown on the lower side of the drawing of FIG. 4 shows a state in which the lower cylinder 154 is at the lowermost position (a position at which the lower cylinder 154 is farthest away from the top dead center of the piston 114 in the stroke direction, and a position at which the lower cylinder 154 is farthest away from the upper cylinder 152 in the stroke direction). As shown in the parts (a) and (b) of FIG. 4, when the hydraulic piston 156 moves upward in FIG. 4 by hydraulic pressure or the like, the lower cylinder 154 connected to the hydraulic piston 156 via the shaft 160 also moves upward. Similarly, when the hydraulic piston 156 moves downward in FIG. 4 by hydraulic pressure or the like, the lower cylinder 154 also moves downward.

In this way, a configuration in which the position of the lower cylinder 154 with respect to the upper cylinder 152 is displaced in the stroke direction by the mover 150 is provided. As a result, the position of the scavenging port 118 provided in the lower cylinder 154 is also displaced in the stroke direction. That is, the opening position 118a on the piston 114's top dead center-side of the scavenging port 118 is displaced in the stroke direction. In other words, the position of the opening edge on the piston 114's top dead center-side of the scavenging port 118 (the position of the opening edge closest to the top dead center of the piston 114, the position of the opening edge closest to the upper cylinder 152) can be changed in the stroke direction by the mover 150.

As described above, in the fuel gas and the fuel oil, in some cases, the optimum timings for causing the active gas to flow into the cylinder 110 from the scavenging port 118 may differ. Specifically, in the case of using the fuel oil, in some cases, it may be preferable that the scavenging port 118 be disposed at a position away from the top dead center (the lower side in FIG. 4) to secure a long expansion stroke after the fuel combustion. On the other hand, in the case of using the fuel gas, in some cases, in order to discharge a large amount of high-temperature exhaust gas in the combustion chamber 130 which causes preignition, it may be preferable that the scavenging port 118 be disposed to be close to the top dead center (the upper side in FIG. 4) to start the scavenging by the active gas early.

In the diesel operation mode using the fuel oil, as shown in the part (b) of FIG. 4, by moving the lower cylinder 154 downward, and in the gas operation mode using the fuel gas, as shown in the part (a) of FIG. 4, by moving the lower cylinder 154 upward, it is possible to cause the active gas to flow into the cylinder 110 from the scavenging port 118 at an appropriate timing. As a result, in the diesel operation mode, a long expansion stroke can be secured to improve the efficiency, and in the gas operation mode, it is possible to increase the injection amount of the fuel gas and to raise the output because the occurrence of preignition is limited.

Further, as shown in the part (a) of FIG. 4, in a state in which the lower cylinder 154 is displaced to the closemost positon to the top dead center, the opening position 118a on the top dead center-side of the scavenging port 118 is to be closer to the bottom dead center than the lower end surface 152b of the upper cylinder 152 (the end portion on the bottom dead center-side).

Therefore, it is possible to avoid a situation in which the upper cylinder 152 covers part of the scavenging port 118 and the inflow of the active gas from the scavenging port 118 is disturbed by the upper cylinder 152, and it is possible to perform inflow of the active gas at an appropriate timing.

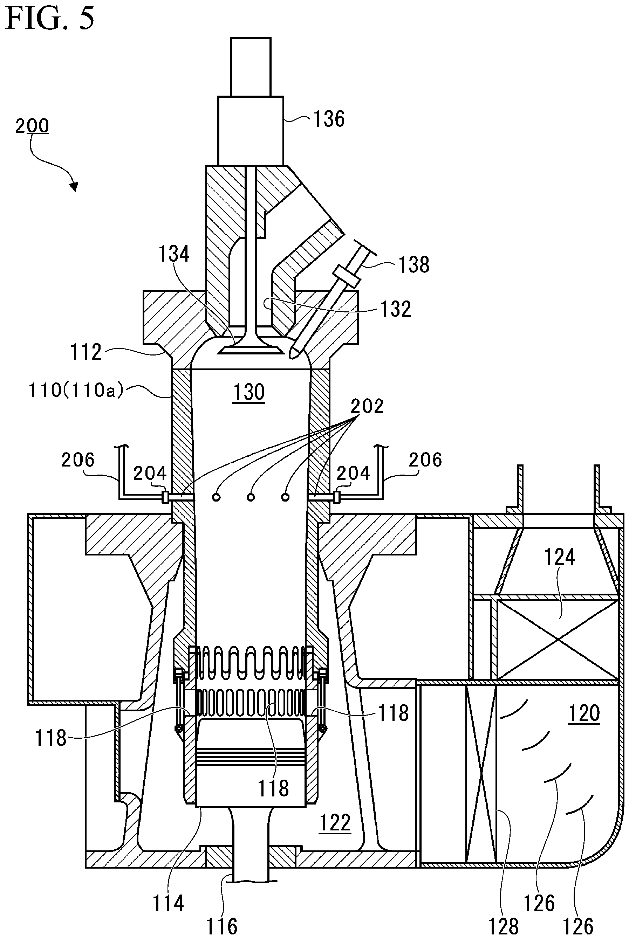

FIG. 5 is an explanatory view showing an entire configuration of a uniflow scavenging type two-cycle engine 200 of a modified example of the above embodiment. In the embodiment described above, the case in which the fuel injection port 148 of the fuel gas supply mechanism injects the fuel gas into the active gas to be sucked into the scavenging port 118 has been described. In the present modified example, a fuel injection port 202 of the fuel gas supply mechanism is provided in a portion of the cylinder 110 between the scavenging port 118 and the exhaust port 132.

A plurality of fuel injection ports 202 are provided at intervals in the circumferential direction of the cylinder 110. A fuel injection valve 204 is disposed at each fuel injection port 202. The fuel injection valve 204 communicates with a fuel pipe 206 and injects the fuel gas guided from the fuel pipe 206 into the cylinder 110 through the fuel injection port 202.

In this way, the fuel gas supply mechanism is not limited to the configuration in which the fuel injection port 148 injects the fuel gas into the active gas to be sucked into the scavenging port 118, and may have a configuration in which the fuel injection port 202 is provided in the cylinder 110 and the fuel gas is supplied from the fuel injection port 202 into the cylinder 110.

Although the embodiments of the present disclosure have been described above with reference to the attached drawings, the present disclosure is not limited to the above-described embodiments. The shapes, combinations, and the like of the constituent members described in the above embodiments are merely examples, and addition, omission, substitution, and other changes of the configuration can be adopted based on design requirements and the like within the technical scope of the present disclosure.

For example, in the embodiment and the modified example described above, a case has been described in which the cylinder 110 is configured to include the upper cylinder 152 and the lower cylinder 154, and the mover 150 displaces the lower cylinder 154 with respect to the upper cylinder 152 in the stroke direction, thereby allowing the displacement of the entire scavenging port 118 in the stroke direction. That is, a configuration in which the position of the opening edge on the top dead center-side of the scavenging port 118 changes in the stroke direction may be adopted, and a configuration in which the entire scavenging port 118 is displaced in the stroke direction may be adopted.

Further, in the embodiment and the modified example described above, the case in which the uniflow scavenging type two-cycle engines 100 and 200 are dual-fuel type engines that switch fuel between the liquid fuel and the fuel gas has been described. However, the uniflow scavenging type two-cycle engines 100 and 200 are not limited to the dual-fuel types, and may be engines that use only one of the liquid fuel and the fuel gas. However, when the uniflow scavenging type two-cycle engine is a dual-fuel type, in each of the gas operation mode and the diesel operation mode, the scavenging port 118 can be opened at an appropriate timing, and the active gas can be allowed to flow into the cylinder 110.

Further, in the embodiment and the modified example described above, the case in which the lower cylinder 154 is displaced in the stroke direction in accordance with the operation mode has been described. However, the lower cylinder 154 is not displaced in accordance with the operation mode but may be displaced in the stroke direction in accordance with the stroke of the engine. For example, in the expansion stroke, when the lower cylinder 154 is positioned to be close to the bottom dead center as shown in the part (b) of FIG. 4, the timing at which the scavenging port 118 starts to open is delayed, and the expansion stroke is lengthened, thereby making it possible to improve the efficiency.

On the other hand, in the compression stroke, when the lower cylinder 154 is positioned to be close to the top dead center as shown in the part (a) of FIG. 4, the timing at which the scavenging port 118 is closed is delayed, and the scavenging (intake) period of time is lengthened, thereby making it possible to efficiently perform the inflow of the active gas and the discharge of the exhaust gas.

In addition, a configuration may be adopted in which when either one of the gas operation mode and the diesel operation mode is performed, the position of the opening edge on the top dead center-side of the scavenging port 118 or the position of the entire scavenging port 118 is changed in the stroke direction depending on the operating conditions (the time of accelerating or decelerating) or the rotational speed of the engine in order to improve the engine efficiency.

In the embodiment and the modified example described above, the case in which the end portion (the upper end portion) of the lower cylinder 154 is inserted through (into) the inside of the upper cylinder 152 (the inside of the lower end portion thereof) has been described. However, the end portion (the lower end portion) of the upper cylinder 152 may be inserted into the inside of the lower cylinder 154 (the inside of the upper end portion thereof). However, when the end portion of the lower cylinder 154 is inserted into the inside of the upper cylinder 152, the outer diameter of the lower cylinder 154 can be reduced to reduce the weight thereof, and the driving force required for the mover 150 can be reduced.

Further, in the embodiment and the modified example described above, the case has been described in which in a state where the lower cylinder 154 is displaced to the closemost position to the top dead center, the opening position 118a on the top dead center-side of the scavenging port 118 is to be closer to the bottom dead center than the end portion on the bottom dead center-side of the upper cylinder 152. However, the opening position on the top dead center-side of the scavenging port 118 may be the same as the end portion on the bottom dead center-side of the upper cylinder 152 or may be positioned to be closer to the top dead center than the end portion.

Moreover, although the case in which the plurality of upper grooves 152a and the plurality of lower protrusions 154b are each provided at intervals in the circumferential direction has been described in the embodiment and modified example described above, the upper grooves 152a and the lower protrusions 154b are not essential structures. However, by providing the upper grooves 152a and the lower protrusions 154b, the circumferential rotation of the lower cylinder 154 with respect to the upper cylinder 152 can be restricted by a simple configuration. Further, by providing the plurality of upper grooves 152a and the plurality of lower protrusions 154b, it is possible to limit the abutment of a piston ring (the end portion forming the abutment) provided in the piston 114 from catching in the upper groove 152a or in the portion between lower protrusions 154b adjacent to each other in the circumferential direction, and the piston 114 can slide smoothly on the inner peripheral surface of the cylinder 110. If the number of the upper grooves 152a and the lower protrusions 154b provided in the circumferential direction is increased, it is possible to further limit the abutment of the piston ring provided in the piston 114 from catching in the upper grooves 152a or the like.

In the embodiment and the modified example described above, although the cylinder cover 112-side is referred to as the upper side and the scavenging chamber 122-side is referred to as the lower side in the central axis direction of the cylinder 110, this description does not limit the posture of the uniflow scavenging type two-cycle engines 100 and 200 in actual use, and they may be used in any posture as long as suitable operation can be ensured..

### Industrial Applicability

The present disclosure can be applied to a uniflow scavenging type two-cycle engine in which a scavenging port is formed in a cylinder.

### Description of Reference Signs

100, 200 Uniflow scavenging type two-cycle engine
110 Cylinder
114 Piston
118 Scavenging port
118a Opening position
150 Mover
152 Upper cylinder
152b Lower end surface (end portion)
154 Lower cylinder
154a Upper end surface (end portion)

## Claims

1. A uniflow scavenging type two-cycle engine (100, 200) being a dual-fuel type which switches fuel between liquid fuel and fuel gas, comprising:
a cylinder (110) including a lower cylinder (154), and an upper cylinder (152) disposed to be closer to a top dead center of a piston (114) than the lower cylinder (154);
a scavenging port (118) which is formed in the lower cylinder (154), is a hole penetrating from an inner peripheral surface to an outer peripheral surface of the lower cylinder (154), opens in a process of movement of the piston (114) toward a bottom dead center, and causes active gas to flow into the cylinder (110); and
a mover (150) which displaces an opening position (118a) on a piston top dead center-side of the scavenging port (118) in a stroke direction of the piston (114), wherein
the mover (150) is configured to displace the lower cylinder (154) with respect to the upper cylinder (152) in the stroke direction of the piston (114) so as to open and close the scavenging port (118) at an appropriate timing depending on the fuel used.

2. The uniflow scavenging type two-cycle engine (100, 200) according to claim 1, wherein
an end portion of either one of the lower cylinder (154) and the upper cylinder (152) is inserted into the other cylinder in the stroke direction of the piston (114).

3. The uniflow scavenging type two-cycle engine (100, 200) according to claim 2, wherein
an end portion of the lower cylinder (154) is inserted into the upper cylinder (152), and
in a state in which the lower cylinder (154) is displaced to a closemost position to the top dead center, the opening position (118a) on the top dead center-side of the scavenging port (118) is closer to the bottom dead center than an end portion on the bottom dead center-side of the upper cylinder (152).

4. The uniflow scavenging type two-cycle engine (100, 200) according to claim 1, wherein
in a state in which the lower cylinder (154) is displaced to a closemost position to the top dead center, the opening position (118a) on the top dead center-side of the scavenging port (118) is to be closer to the bottom dead center than an end portion on the bottom dead center-side of the upper cylinder (152).

## Patentansprüche

1. Zweitaktverbrennungsmotor (100, 200) der Gleichstromspülungsart, der von einer Dualkraftstoffart ist, die Kraftstoff zwischen flüssigem Kraftstoff und Kraftstoffgas schaltet, mit:
einem Zylinder (110), der einen unteren Zylinder (154) und einen oberen Zylinder (152) umfasst, der näher zu einem oberen Totpunkt eines Kolbens (114) als der untere Zylinder (154) angeordnet ist;
einem Spülanschluss (118), der in dem unteren Zylinder (154) ausgebildet ist, ein Loch ist, das von einer Innenumfangsfläche zu einer Außenumfangsfläche des unteren Zylinders (154) hindurchdringt, in einem zu einem unteren Totpunkt hin erfolgenden Bewegungsprozess des Kolbens (114) öffnet, und bewirkt, dass Aktivgas in den Zylinder (110) strömt; und
einer Bewegungseinrichtung (150), die eine obere Position (118a) an einer Kolbenobertotpunktseite des Spülanschlusses (118) in einer Hubrichtung des Kolbens (114) versetzt, wobei
die Bewegungseinrichtung (150) so aufgebaut ist, dass sie den unteren Zylinder (154) in Bezug auf den oberen Zylinder (152) in der Hubrichtung des Kolbens (114) so versetzt, dass der Spülanschluss (118) zu einer geeigneten Zeitabstimmung in Abhängigkeit von dem verwendeten Kraftstoff geöffnet und geschlossen wird.

2. Zweitaktverbrennungsmotor (100, 200) der Gleichstromspülungsart gemäß Anspruch 1, wobei
ein Endabschnitt von entweder dem unteren Zylinder (154) oder dem oberen Zylinder (152) in den anderen Zylinder in der Hubrichtung des Kolbens (114) eingeführt ist.

3. Zweitaktverbrennungsmotor (100, 200) der Gleichstromspülungsart gemäß Anspruch 2, wobei
ein Endabschnitt des unteren Zylinders (154) in den oberen Zylinder (152) eingeführt ist, und
in einem Zustand, bei dem der untere Zylinder (154) zu einer zu dem oberen Totpunkt nächstgelegenen Position versetzt ist, die Öffnungsposition (118a) an der Obertotpunktseite des Spülanschlusses (118) näher zu dem unteren Totpunkt ist als ein Endabschnitt an der Untertotpunktseite des oberen Zylinders (152).

4. Zweitaktverbrennungsmotor (100, 200) der Gleichstromspülungsart gemäß Anspruch 1, wobei
in einem Zustand, bei dem der untere Zylinder (154) zu einer zu dem oberen Totpunkt nächstgelegenen Position versetzt ist, die Öffnungsposition (118a) an der Obertotpunktseite des Spülanschlusses (118) näher zu dem unteren Totpunkt ist als ein Endabschnitt der Untertotpunktseite des oberen Zylinders (152).

## Revendications

1. Moteur à deux temps (100, 200) à balayage équicourant, étant de type bicarburation, qui commute le carburant entre le carburant liquide et le gaz combustible, comprenant :
un cylindre (110) comprenant un cylindre inférieur (154) et un cylindre supérieur (152) disposé de manière à être plus proche d'un point mort haut d'un piston (114) que le cylindre inférieur (154) ;
un orifice de balayage (118) formé dans le cylindre inférieur (154) est un trou pénétrant d'une surface périphérique intérieure à une surface périphérique extérieure du cylindre inférieur (154), s'ouvre lors d'un processus de déplacement du piston (114) vers un point mort bas, et provoque l'écoulement de gaz actif dans le cylindre (110) ; et
un dispositif de déplacement (150) qui déplace une position d'ouverture (118a) du côté du point mort haut du piston de l'orifice de balayage (118) dans un sens de course du piston (114), dans lequel
le dispositif de déplacement (150) est configuré pour déplacer le cylindre inférieur (154) par rapport au cylindre supérieur (152) dans le sens de course du piston (114) de manière à ouvrir et à fermer l'orifice de balayage (118) à un moment approprié en fonction du carburant utilisé.

2. Moteur à deux temps (100, 200) à balayage équicourant selon la revendication 1, dans lequel
une partie d'extrémité de l'un ou l'autre des cylindres inférieur (154) et supérieur (152) est insérée dans l'autre cylindre dans le sens de course du piston (114).

3. Moteur à deux temps (100, 200) à balayage équicourant selon la revendication 2, dans lequel
une partie d'extrémité du cylindre inférieur (154) est insérée dans le cylindre supérieur (152), et
dans un état où le cylindre inférieur (154) est déplacé vers une position la plus proche du point mort haut, la position d'ouverture (118a) du côté du point mort haut de l'orifice de balayage (118) est plus proche du point mort bas qu'une partie d'extrémité du côté du point mort bas du cylindre supérieur (152).

4. Moteur à deux temps (100, 200) à balayage équicourant selon la revendication 1, dans lequel
dans un état où le cylindre inférieur (154) est déplacé vers une position la plus proche du point mort haut, la position d'ouverture (118a) du côté du point mort haut de l'orifice de balayage (118) est plus proche du point mort bas qu'une partie d'extrémité du côté du point mort bas du cylindre supérieur (152).
